(19) Europäisches Patentamt
European Patent Office
Office européen des brevets

(11) Veröffentlichungsnummer: **0 452 783 B1**

# (12) EUROPÄISCHE PATENTSCHRIFT

(45) Veröffentlichungstag der Patentschrift: **01.03.95**

(51) Int. Cl.[6]: **C08L 77/00**, C08L 71/12, C08J 5/00

(21) Anmeldenummer: **91105641.4**

(22) Anmeldetag: **10.04.91**

## (54) Thermoplastische Formmassen auf Basis von Polyphenylenethern und Polyamiden.

(30) Priorität: **19.04.90 DE 4012448**

(43) Veröffentlichungstag der Anmeldung:
**23.10.91 Patentblatt 91/43**

(45) Bekanntmachung des Hinweises auf die Patenterteilung:
**01.03.95 Patentblatt 95/09**

(84) Benannte Vertragsstaaten:
**BE DE FR GB NL**

(56) Entgegenhaltungen:
**EP-A- 0 302 485**
**DE-A- 3 707 796**
**DE-A- 3 828 497**

(73) Patentinhaber: **BASF Aktiengesellschaft**
**Carl-Bosch-Strasse 38**
**D-67063 Ludwigshafen (DE)**

(72) Erfinder: **Mühlbach, Klaus, Dr.**
**Dr.-Heinrich-Winter-Strasse 19**
**W-6148 Heppenheim (DE)**
Erfinder: **Bender, Dietmar, Dr.**
**Sebastian-Kneipp-Strasse 19**
**W-6707 Schifferstadt (DE)**
Erfinder: **Steiert, Peter, Dr.**
**Madenburgstrasse 10**
**W-6700 Ludwigshafen (DE)**

EP 0 452 783 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, enthaltend

A) 5 bis 95 Gew.-% eines thermoplastischen Polyamids,

B) 3 bis 80 Gew.-% eines durch Einbau mindestens einer Carbonyl- Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifizierten Polyphenylenethers,

C) 2 bis 20 Gew.-% eines Blockcopolymeren der allgemeinen Formel A-B, bestehend aus einem vinylaromatischen Block A und einem teilhydrierten Polybutadienblock B,

D) 0 bis 20 Gew.-% eines von C) verschiedenen kautschukelastischen Polymerisates und

E) 0 bis 60 Gew.-% üblicher Zusatzstoffe,

wobei die Summen der Komponenten A) bis E) 100 Gew.-% ergibt, dadurch gekennzeichnet, daß die Komponente C)

- ein mittleres Molekulargewicht von mindestens 75.000 aufweist und
- der polyvinylaromatische Block A 10 bis 50 Gew.-%, bezogen auf 100 Gew.-% der gesamten Komponente C) ausmacht und
- der Polybutadienblock B) einen Hydrierungsgrad von 50 bis 99 Gew.-%

aufweist.

Weiterhin betrifft die Erfindung die Verwendung dieser Formmassen zur Herstellung von Formkörpern sowie die Formkörper, die unter Verwendung dieser Formmassen als wesentliche Komponenten erhältlich sind.

Formkörper auf der Basis von Blends aus Polyphenylenethern und Polyamiden weisen allgemein gute Gebrauchseigenschaften auf, wenn zum einen eine ausreichende Phasenhaftung der beiden Polymermatrices gegeben ist und zum anderen bei den verschiedenen Einsatzzwecken entsprechende schlagzäh modifizierende Kautschuke enthalten sind.

Aus den EP-A-46 040, WO 87/540, EP-A-236 593, EP-A- 24 120, EP-A-147 874, EP-A-302 485 und WO 86/020086 sind Methoden zur Verbesserung der Phasenhaftung bekannt.

Der Zusatz von schlagzäh modifizierenden Kautschuken wird sehr allgemein beschrieben, wobei meist A-B-A-Dreiblockcopolymere auf Basis von vinylaromatischen Polymeren A) und Dienpolymeren B) in den bevorzugten Ausführungsformen genannt werden.

Aus der EP-A-297 633 sind Mischungen von teilhydrierten A-B und A-B-A-Blockcopolymeren als schlagzähmodifizierender Kautschuk in PPE/PA-Blends bekannt. Nach der bevorzugten Ausführungsform bestehen die A-B-Blockcopolymere aus Polystyrolblöcken und teilhydrierten Polyisoprenblöcken.

Aus der WO 87/05311 sind Blends aus PPE/PA bekannt, die ein selektiv hydriertes Diblockcopolymer des A-B-Typs enthalten, wobei Block A ein alkenylaromatisches Polymer und Block B ein Isoprenpolymer ist, aus welchem durch Hydrierung ein Ethylenpropylen-Block entsteht.

Bei den bislang bekannten Blends sind die mechanischen Eigenschaften zwar punktuell verbessert worden, jedoch zeigen daraus hergestellte Formkörper eine nicht ausreichende Verformung bei maximaler Durchstoßkraft, wie sie für hochbeanspruchte Formteile im Kfz-Bereich gefordert wird.

Der vorliegenden Erfindung lag daher die Aufgabe zugrunde, thermoplastische Formmassen zur Verfügung zu stellen, deren daraus herstellbare Formkörper eine möglichst große Verformung bis zum duktilen Bruch und zudem eine gute Zähigkeit und Fließfähigkeit aufweisen.

Demgemäß wurden die eingangs definierten Formmassen gefunden.

Bevorzugte Massen dieser Art und ihre Verwendung sind den Unteransprüchen zu entnehmen.

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolymaide enthalten als Komponente al) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von $\epsilon$-Caprolactam ableiten ($a_2$) und/oder Einheiten, die sich von Adipinsäure und Hexamethylendiamin ($a_3$) ableiten.

Der Anteil an Einheiten die sich von $\epsilon$-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von $\epsilon$-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von $\epsilon$-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $a_1$)) und 20 bis 50, vorzugsweise 25 bis 40 Gew.-% Einheiten, die sich von $\epsilon$-Caprolactam ableiten (Einheiten $a_2$)), erwiesen.

Die Herstellung der teilaromatischen Copolyamide kann z.B. nach dem in den EP-A-129 195 und EP 129 196 beschrienen Verfahren erfolgen.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23 °C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide A) an den erfindungsgemäßen Formmassen beträgt 5 bis 95, vorzugsweise 17 bis 75 und insbesondere 25 bis 65 Gew.-%.

Als Komponente B) enthalten die erfindungsgemäßen Formmassen 3 bis 80, bevorzugt 22 bis 75 und insbesondere 20 bis 50 Gew.-% eines modifizierten Polyphenylenethers.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25 °C nach DIN 53 726.

Die unmodifizierten Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117

bis 189).

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-polyphenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether, Poly(2,6-dibenzyl-1,4-phenylen)ether, Poly(2-ethoxi-1,4-phenylenether), Poly(2-chlor-1,4-phenylenether), Poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, $\alpha$-Methylstyrol, Vinyltoluol und Chlorstyrol geeignet.

Funktionalisierte oder modifizierte Polyphenylenether B) sind an sich bekannt, z.B. aus WO-A 86/02086, WO-A 87/00540, EP-A-222 246, EP-A-223 116 und EP-A-254 048.

Üblicherweise wird der Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem 2. Polymeren der Mischung, dem Polyamid, gewährleistet ist.

Die Modifizierung wird im allgemeinen durch Umsetzung eines Polyphenylenethers $b_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($b_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen (Monomere $b_{31}$), die Mono- oder Diamide dieser Säuren wie N-Phenylmaleinimid (Monomere $b_{32}$), Maleinhydrazid, das Säurechlorid des Trimelithsäureanhydrids, Benzol-1,2-dicarbonsäureanhydrid-4-carbonsäureessigsäureanhydrid, Chlorethanoylsuccinaldehyd, Chlorformylsuccinaldehyd, Zitronensäure und Hydroxysuccinsäure. Als Monomere $b_{33}$) seien beispielsweise N-Vinylpyrrolidon und (Meth)acryloylcaprolactam genannt.

Bevorzugt wird in den erfindungsgemäßen Formmassen als Komponente B) ein modifizierter Polyphenylenether eingesetzt, der durch Umsetzen von

- $b_1$) 70 bis 99,95 Gew.-% eines unmodifizierten Polyphenylenethers,
- $b_2$) 0 bis zu weniger als 40 Gew.-% eines vinylaromatischen Polymeren,
- $b_3$) 0,05 bis 30 Gew.-% mindestens einer Verbindung aus der Gruppe gebildet aus
  - $b_{31}$) einer $\alpha,\beta$-ungesättigten Dicarbonylverbindung,
  - $b_{32}$) eines Amid-Gruppen enthaltenden Monomeren mit einer polymerisierbaren Doppelbindung und
  - $b_{33}$) eines Lactam-Gruppen enthaltenden Monomeren mit einer polymerisierbaren Doppelbindung,
- $b_4$) 0 bis 5 Gew.-% eines Radikalstarters

wobei sich die Gewichtsprozente auf die Summe von $b_1$) bis $b_4$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer ($b_2$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Radikalstarter ($b_4$) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Ditert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

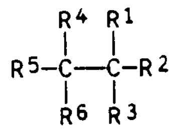

wobei $R^1$ bis $R^6$ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente C) enthalten die erfindungsgemäßen Formmassen 2 bis 20, bevorzugt 3 bis 17 und insbesondere 4 bis 15 Gew.-% eines Blockcopolymeren der allgemeinen Formel A-B, bestehend aus einem vinylaromatischen Block A und einem teilhydrierten Polybutadienblock B, wobei die Komponente C)

- ein mittleres Molekulargewicht von mindestens 75.000, bevorzugt mindestens 100.000 und insbesondere mindestens 120.000 aufweist, und
- der polyvinylaromatische Block A 10 bis 50, vorzugsweise 12 bis 45 und insbesondere 15 bis 40 Gew.-%, bezogen auf 100 Gew.-% der gesamten Komponente C) ausmacht und
- der Polybutadienblock B einen Hydrierungsgrad von 50 bis 99, bevorzugt von 70 bis 99 und insbesondere von 90 bis 99 Gew.-% aufweist.

Unter Blockcopolymeren werden bekanntlich solche Copolymere verstanden, bei denen die unterschiedlichen Monomeren nicht statistisch in der Kette eingebaut sind, sondern in denen homopolymere Kettenabschnitte (Polymerblöcke) der verschiedenen Monomeren miteinander verknüpft sind. Bei Zweiblockcopolymeren der allgemeinen Formel A-B ist der homopolymere Kettenabschnitt A mit dem homopolymeren Kettenabschnitt B eines anderen Monomeren verbunden.

Die Blockcopolymeren C bestehen aus 10 bis 50, bevorzugt 12 bis 45 Gew.-% mindestens eines vinylaromatischen Kohlenwasserstoffs, der den Block A bildet und 90 bis 50, bevorzugt 88 bis 55 Gew.-% eines Butadien-Monomeren, das den Kautschukblock bildet. Das Gewichtsverhältnis der Monomeren im Blockcopolymeren kann nach üblichen Methoden bestimmt werden, z.B. durch oxidativen Abbau der unhydrierten Blockcopolymeren mit Osmiumtetroxid und gravimetrischer Analyse, IR-spektroskopisch oder über eine Bestimmung des Brechungsindex.

Das mittlere Molekulargewicht des Blockcopolymeren, worunter im Rahmen dieser Erfindung das Zahlenmittel des Molekulargewichtes verstanden wird, soll größer 75.000, bevorzugt größer 100.000 g/Mol, insbesondere größer als 120.000 sein. Es wird, wie unten beschrieben, durch Gelpermeationschromatographiebestimmt.

Das mittlere Molekulargewicht des Blockes B ist in weiten Bereichen unkritisch. Es hat sich jedoch als vorteilhaft herausgestellt, wenn B ein höheres Molekulargewicht als der Block A aufweist. Das mittlere Molekulargewicht des Polymerblockes B ist beispielsweise durch Differenzbildung der Molekulargewichte von A zum mittleren Molekulargewicht des Blockcopolymeren A-B erhältlich.

Der Polymerblock A kann aus vinylaromatischen Kohlenwasserstoffen, wie z.B. Styrol, $\alpha$-Methylstyrol und kernalkylierten Styrolen bestehen, wobei Styrol bevorzugt ist. Der Elastomerblock B wird aus Butadien, dem geringe Mengen bis zu 5 Gew.-%, damit copolymerisierbarer Monomere zugesetzt werden können, aufgebaut. Die copolymerisierbaren Monomeren sind vorzugsweise Styrol und Isopren.

Bevorzugt werden jedoch Polybutadienblöcke B ohne Comonomere verwendet.

Es hat sich als vorteilhaft erwiesen, wenn 25 bis 95 Gew.-%, vorzugsweise 35 bis 60 Gew.-% dieser Monomeren des Kautschukblockes B in 1,2-Konfiguration polymerisiert sind.

Die Herstellung der Blockcopolymeren C kann nach bekannten Methoden der anionischen Blockpolymerisation durch sequentielle Addition der Monomeren oder Kopplungstechniken erfolgen. Derartige Verfahren werden z.B. in den US-Patentschriften 3 251 905, 3 390 207, 3 598 887 und 4 219 627 ausführlich beschrieben. Als Initiatoren für die Polymerisation eignen sich alkalimetallorganische Verbindungen, vorzugsweise Lithiumalkyle wie z.B. Methyllithium, Ethyllithium, n-, s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte alphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohehan oder Toluol sowie jede beliebige Mischung der aliphatischen, cycloaliphatischen und aromatischen Kohlenwasserstoffe. Vorteilhaft wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch adsorptive Reinigung, z.B. an Aluminiumoxid erfolgen kann. Die Durchführung der Polymerisation erfolgt unter Inertgasbedingungen bei Temperaturen von -20 bis +130 °C, vorzugsweise bei 25 bis 80 °C. Es wird bei Drucken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Im allgemeinen wird so vorgegangen, daß in einer ersten Polymerisationsstufe der vinylaromatische Kohlenwasserstoff zur Bildung des A-Blocks vollständig auspolymerisiert wird, im zweiten Polymerisationsschritt der Dienkohlenwasserstoff zur Bildung des B-Blocks vollständig umgesetzt wird. Dabei entstehen scharfe Übergänge zwischen den einzelnen Blöcken.

Es ist ebenso möglich, die Reihenfolge der Polymerisation der Blöcke A und B umzukehren.

Die so erhaltenen Blockcopolymeren werden nach üblichem Verfahren durch Hydrierbehandlung in Polymere übergeführt, in denen die aliphatischen ungesättigten Bindungen teilweise abgesättigt sind, d.h. die einen Hydrierungsgrad von 50 bis 99 Gew.-% aufweisen, bevorzugt 70 bis 99 und insbesondere 90 bis 99 Gew.-%.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind, erfolgen. Verfahren zur selektiven Hydrierung von Blockcopolymeren werden u.a. in den US-Patentschriften 3 113 986 und 4 226 952 beschrieben.

Das Polymerisationsgemisch kann zur Isolierung des Polymeren nach bekannten Verfahren wahlweise direkt zur Trockne erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Der Restdoppelbindungsgehalt der olefinisch ungesättigten Bindungen wird durch Fourier-Analyse der Infrarotspektren oder durch iodometrische Titration nach Wijs ermittelt.

Bei der Charakterisierung der Blockcopolymeren C werden die folgenden Methoden verwendet:
Die mittleren Molekulargewichte M (Zahlenmittel $M_n$) werden durch Gelpermeationschromatographie anhand von Eichkurven für Polystyrol (Eichsubstanzen mit sehr enger Molekulargewichtsverteilung: $M_w/M_n$ ca. 1) bei 23 °C in 0,125 gew.-%iger Tetrahydrofuranlösung bei einer Durchflußgeschwindigkeit von 1,5 ml/min [vgl. G. Glöckner, "Polymercharakterisierung durch Flüssigkeitschromatographie", Verlag A. Hütig, Heidelberg, 1982] gemessen.

Neben den wesentlichen Komponenten A, B und C können die erfindungsgemäßen Formmassen 0 bis 20, bevorzugt 0 bis 10 und insbesondere 0 bis 8 Gew.-% eines von C verschiedenen kautschukelastischen Polymerisates enthalten. Es können übliche Schlagzähmodifier D verwendet werden, die für Polyamide (Komponente A) geeignet sind und Kautschuke D, die üblicherweise Polyphenylenether (Komponente B) schlagzäh modifizieren.

Als kautschukelastische Polymerisate D für Polyamide A werden solche bevorzugt, die an der Oberfläche reaktive Gruppen aufweisen.

Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

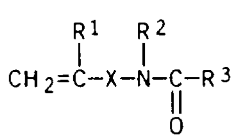

eingeführt werden können,
wobei die Substituenten folgende Bedeutung haben können:

$R^1$ Wasserstoff oder eine $C_1$-$C_4$-Alkylgruppe,

$R^2$ Wasserstoff, eine $C_1$-$C_8$-Alkylgruppe oder eine Arylgruppe, insbesondere Phenyl,

$R^3$ Wasserstoff, eine $C_1$-$C_{10}$-Alkyl-, eine $C_6$-$C_{12}$-Arylgruppe oder $OR^4$, worin $R^4$ eine $C_1$-$C_8$-Alkyl- oder $C_6$-$C_{12}$-Arylgruppe ist, die gegebenenfalls mit O- oder N-haltigen Gruppen substituiert sein kann,

X eine chemische Bindung, eine $C_1$-$C_{10}$-Alkylen- oder $C_6$-$C_{12}$-Arylengruppe oder

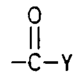

worin Y entweder O-Z- oder NH-Z bedeutet und Z eine $C_1$-$C_{10}$-Alkylen- oder $C_6$-$C_{12}$-Arylengruppe sein kann.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können, sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit $C_1$-$C_{30}$-Alkoholen wie Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylalkohol. Maleinsäureanhydrid sowie Ester der Acrylsäure oder Methacrylsäure mit tertiären Alkoholen, z.B. tert.-Butylacrylat, weisen zwar keine freien Carboxylgruppen auf, kommen in ihrem Verhalten aber den freien Säuren nahe und werden deshalb als Monomere mit latenten Säuregruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Der Anteil der von den vorstehend aufgeführten Monomeren abgeleiteten Gruppen beträgt im allgemeinen 0,5 bis 40, vorzugsweise 0,5 bis 25 Gew.%, bezogen auf das Gesamtgewicht des Kautschuks.

Diese Monomeren können entweder mit den anderen Monomeren bereits bei der Herstellung des Kautschuks copolymerisiert werden oder aber auf einen bereits fertig vorliegenden, nicht modifizierten Kautschuk aufgepfropft werden, und zwar vorzugsweise unter Mitverwendung von Radikalstartern.

Bei den Kautschuken handelt es sich im allgemeinen um Polymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril, Acrylsäure, Methacrylsäure und Acryl- und Methacrylsäureester mit 1 bis 18 C-Atomen in der Alkoholkomponente.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (ML1 + 4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5, 5-Ethyliden-norbornen und Dicyclopentadien. Der Diengehalt der EPDM-Kautschuke beträgt im allgemeinen 0,5 bis 50, insbesondere 3 bis 15 Gew.%, bezogen auf das Gesamtgewicht des Kautschuks.

EPM- bzw. EPDM-Kautschuke werden üblicherweise mit den oben genannten, reaktive Gruppen tragenden Monomeren gepfropft. Hier seien nur Acrylsäure, Methacrylsäure und deren Derivate sowie Maleinsäureanhydrid genannt.

Eine weitere Gruppe von Kautschuken sind Copolymere des Ethylens mit Estern der Acryl- bzw. Methacrylsäure, z.B. mit den Methyl-, Ethyl-, Propyl-, n-, i- bzw. t-Butyl- und 2-Ethylhexylestern. Zusätzlich können die Kautschuke noch die oben genannten reaktiven Gruppen z.B. in Form von Dicarbonsäuren, Derivate dieser Säuren, Vinylestern und -ethern enthalten.

Der Ethylengehalt der Copolymeren liegt im allgemeinen im Bereich von 50 bis 98 Gew.%, der Anteil an Epoxidgruppen enthaltenden Monomeren und der Anteil des Acrylsäure- und/oder Methacrylsäureesters jeweils im Bereich von 1 bis 49 Gew.%.

Bevorzugt sind Olefinpolymerisate aus

50 bis 98,9 insbesondere 60 bis 95 Gew.% Ethylen,

0,1 bis 20, insbesondere 0,15 bis 15 Gew.% Glycidylacrylat und/oder Glycidylmethacrylat, Acrylsäure und/oder Maleinsäure anhydrid,

1 bis 45, insbesondere 10 bis 35 Gew.% n-Butylacrylat und/oder 2-Ethylhexylacrylat.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190 °C und 2,16 kg Belastung).

Geeignete Elastomere zur Schlagzähmodifizierung von Polyamid sind weiterhin reaktive Gruppen enthaltende Pfropfcopolymerisate mit Butadien, Butadien/Styrol-, Butadien/Acrylnitril- und Acrylesterkautschuken als Pfropfgrundlage, wie sie z.B. in den DE-A 16 94 173, DE-A 23 48 377, DE-A 24 44 584 und DE-A 27 26 256 beschrieben werden. Von diesen seien die sogenannten ABS-Polymerisate erwähnt, wie sie in den DE-A-20 35 390, DE-A-22 48 242 und der EP-A-22 216 beschrieben werden.

Derartige Pfropfpolymerisate sind vorzugsweise aus

25 bis 98 Gew.% eines Acrylatkautschuks mit einer Glasübergangstemperatur von unter -20 °C als Pfropfgrundlage (Basispolymer) und

2 bis 75 Gew.% eines copolymerisierbaren ethylenisch ungesättigten Monomeren, dessen Homo- bzw. Copolymerisate eine Glasübergangstemperatur von mehr als 25 °C aufweisen, als Pfropfauflage (Pfropfhülle)

aufgebaut.

Die Pfropfgrundlage ist ein Acrylat oder Methacrylatkautschuk, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden üblicherweise eingesetzt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A 27 26 256 und der EP-A 50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Gut geeignete Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A 50 262 beschrieben werden.

Als Pfropfmonomere eignen sich besonders Styrol, $\alpha$-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Einführung der reaktiven Gruppen in Pfropfcopolymerisate kann z.B. durch Mitverwendung der entsprechenden Monomeren bei der Herstellung der Pfropfhülle erfolgen. In diesem Fall beträgt deren Anteil an der Pfropfmonomermischung vorzugsweise 0,5 bis 30, insbesondere 1 bis 25 Gew.%. Es ist auch möglich, die entsprechenden Monomeren als letzte Pfropfhülle getrennt aufzubringen.

Die Pfropfausbeute, d.h. der Quotient aus der Menge des aufgepfropften Monomeren und der Menge des eingesetzten Pfropfmonomeren liegt im allgemeinen im Bereich von 20 bis 90 %.

Als weitere Kautschuke sind solche zu nennen, die den Polyphenylenether (Komponente B) schlagzäh modifizieren.

Beispielhaft seien thermoplastische Kautschuke, wie Polybutadien-, Polybuten-, Polyisopren-, Acrylnitrilbutadien-, Ethylenpropylen-, Polyester- oder Ethylenkautschuke und elastomere Copolymere aus Ethylen und Estern der Acrylsäure oder Methacrylsäure, z.B. Ethylenbutylacrylatcopolymere erwähnt. Weiterhin seien genannt Ionomere, Polyoctenylene, Pfropfkautschuke mit einem Pfropfkern aus Butadien oder Isopren oder Alkylacrylaten oder Alkylmethacrylaten und einer Pfropfhülle aus Styrol oder/und $\alpha$-Methylstyrol sowie vorzugsweise Styrol-Butadien-Blockcopolymere einschließlich ABA-, und ABAB-Blockcopolymere, Styrol-Isopren-Blockcopolymere einschließlich AB, ABA und ABAB-Blockcopolymere, die auch verschmierte Übergänge haben können, Sternblockcopolymere und ähnliche, analoge (teil)hydrierte Blockcopolymerisate sowie A-B-Styrol-Butadien-Blockcopolymere. Diese Kautschuke können auch in mit vinylaromatischen Monomeren wie Styrol gepfropfter Form eingesetzt werden (EP-A 234 063 und US-A 4 681 915).

Die Kautschuke D weisen vorzugsweise eine Glasübergangstemperatur von unter -30 °C, insbesondere von unter -40 °C auf. Selbstverständlich können auch Mischungen der vorstehend aufgeführten Kautschuktypen eingesetzt werden.

Als weiteren Bestandteil können die erfindungsgemäßen Formmassen 0 bis 60, vorzugsweise 0 bis 50 und insbesondere 0 bis 35 Gew.-% üblicher Zusatzstoffe enthalten.

Bevorzugte faserförmige Verstärkungsstoffe (Komponente E) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (Komponente A) oder dem Polyphenylenether (Komponente B) mit einer Schlichte und einem Haftvermittler ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe E eignen sich amorphe Kieselsäure, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Die erfindungsgemäßen Formmassen können weiterhin Flammschutzmittel . in einer Konzentration von 0 bis 20 Gew.%, bevorzugt von 0 bis 12,5 Gew.%, bezogen auf das Gesamtgewicht der Formmasse, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel ist elementarer Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist weiterhin 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan und gegebenenfalls einem Synergisten z.B. Antimontrioxid.

Weitere Phosphorverbindungen wie organische Phosphorsäure, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder in Mischung mit rotem Phosphor verwendet werden.

Beispiele für bevorzugte Phosphorverbindungen sind Phosphorsäureester oder partielle Phosphorsäureester mit gleichen oder verschiedenen Kohlenwasserstoffresten wie Alkyl, Cycloalkyl, Aryl, alkylsubstituiertes Aryl und arylsubstituiertes Alkyl. Bis zu zwei Estergruppen können durch Halogen oder Wasserstoff oder deren Kombinationen ersetzt sein, vorausgesetzt, daß mindestens eine weitere Estergruppe mit einem aromatischen Alkohol vorhanden ist.

Beispiele solcher geeigneter Phosphate sind Phenylbisdodecylphosphat, Phenylbisneopentylphosphat, Phenylethylenhydrogenphosphat, Phenyl-(bis-3,5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri-(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind Ester mit ausschließlich aromatischen Alkoholen. Das am meisten bevorzugte Phosphat ist Triphenylphosphat. Weiter ist die Kombination von Triphenylphosphat mit rotem Phosphor bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(N-Aziridinyl)-phosphinoxid oder Tetrakis-(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Übliche Zusatzstoffe sind darüber hinaus beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher, die in Mengen bis zu 20 Gew.-%, vorzugsweise bis zu 10 Gew.-% in den erfindungsgemäßen Formmassen enthalten sein können.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können mitverwendet werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen Formmassen können zusätzlich bis zu 20 Gew.-% eines Phasenvermittlers enthalten, der die Verträglichkeit zwischen Polyamid und Polyphenylenether erhöht. Darunter versteht man im allgemeinen Dienpolymere wie flüssiges Polybutadien, Polyisopren, Poly-1,3-pentadien oder deren Copolymere mit Styrol, $\alpha$-Methylstyrol und p-Hydroxystyrol mit einem Zahlenmittel des Molekulargewichtes von 150 bis 10.000.

Ebenso geeignet sind Epoxidharze aus Epichlorhydrin und Polyhydroxyphenolen wie Bisphenol A, Hydrochinon oder Resorcin sowie Glycidethermodifizierte Phenol- oder Kresolnovolake, Phenoxyharze. Weiterhin können Epoxidharze aus Epichlorhydrin und Polyhydroxyalkoholen wie Ethylen-, Propylen- oder Butylenglykol, Polyethylenglykol, Polypropylenglykol, Glycerin, Trimethylolethan und Pentaerythrit sowie Glycidether von Phenolen oder aliphatischen Alkoholen, Glycidylderivate von Aminen z.B. das Diglycidylderivat von Anilin verwendet werden. Außerdem können epoxidierte natürliche ungesättigte Öle und Epoxidierungsprodukte der oben erwähnten niedermolekularen Dienpolymeren eingesetzt werden.

Weitere geeignete Phasenvermittler werden z.B. in den EP-A-24 120, DE-A-3 619 224 und EP-A-164 767 sowie EP-A-182 163 beschrieben.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextruder, Brabender-Mühlen oder Banbury-Mühlen mischt und anschließend extrudiert. Nach der Extrusion wird das Extrudat abgekühlt und zerkleinert.

Um eine möglichst homogene Formmasse zu erhalten, ist eine intensive Durchmischung notwendig. Dazu sind im allgemeinen mittlere Mischzeiten von 0,2 bis 30 Minuten bei Temperaturen von 280 bis 380 °C erforderlich. Bevorzugt sind Mischzeiten, die eine gute Dispergierung ermöglicht, so daß die Komponenten B) mit C) in Form feiner Partikel in A) vorliegen. Der mittlere Partikeldurchmesser bestimmt durch Elektronenmikroskopie ist vorzugsweise kleiner 2 µm, insbesondere kleiner 1 µm. Die Abmischreihenfolge der Komponenten kann variiert werden, so können zwei oder ggf. drei Komponenten vorgemischt werden, es können aber auch alle Komponenten gemeinsam gemischt werden. Wird die Komponente $B_2$

eingesetzt, so kann es von Vorteil sein, den modifizierten Polyphenylenether $B_2$ in einer ersten Zone eines Extruders herzustellen und in einer oder mehreren nachfolgenden Zonen des Extruders mit den übrigen Komponenten der erfindungsgemäßen Formmasse zu vermischen. Ein solches Verfahren ist in der DE-A 37 02 582 beschrieben.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen sind gut verarbeitbar. Daraus herstellbare Formkörper zeichnen sich durch eine erhöhte multiaxiale Zähigkeit und Kerbschlagzähigkeit aus.

Darüber hinaus zeichnen sich die Formkörper durch eine hohe Verformbarkeit bei Schlagbeanspruchung aus.

Infolge dieses Eigenschaftsspektrums eignen sich die aus den erfindungsgemäßen Formmassen herstellbaren Formkörper besonders für Karosserieteile und Funktionsteile im Motorbereich von Kraftfahrzeugen sowie für den Elektrosektor.

Füllstoffhaltige bzw. verstärkte Formkörper werden vor allem als Radblenden verwendet.

Beispiele

Folgende Komponenten wurden für verschiedene Mischungen verwendet:

Komponente A

A1: Polyamid 6, Zahlenmittel des Molekulargewichts $\overline{M}_n$ = 18.000
A2: Polyamid 6,6, $\overline{M}_n$ = 22000

Komponente B

B1: 90 Gew.-% Poly-(2,6-dimethyl-1,4-phenylen)ether mit einer reduzierten, spezifischen Viskosität von 0,60 dl/g (1 gew.%ig in $CHCl_3$ bei 25 °C) und 10 Gew.-% Polystyrol.

B2: 90 Gew.-% Poly-(2,6-dimethyl-1,4-phenylen)ether mit einer reduzierten spezifischen Viskosität von 0,60 dl/g (1 gew.-%ig in $CHCl_3$ bei 25 °C) und 8 Gew.-% Polystyrol (Schmelzflußindex MFI bei 200 °C/5 kg Belastung = 24 g/10 min), 1,95 Gew.-% Fumarsäure und 0,05 Gew.-% 3,4-Dimethyl-3,4-diphenylhexan wurden in einem Zweischneckenextruder (ZSK 30, Fa. Werner & Pfleiderer) dosiert, in einem ersten Teil unter Verwendung von Knetelementen bei 270 °C aufgeschmolzen, in einem zweiten Teil unter Kneten und Verwendung von Knetelementen bei 280 °C umgesetzt und anschließend in einer Entgasungszone bei 300 °C unter Anlegen von Vakuum entgast. Die mittlere Verweilzeit im Extruder betrug 1,5 min.

Komponente C

Die in Tabelle 2 angegebenen Blockcopolymeren C1-C2* wurden entsprechend der allgemeinen Arbeitsvorschrift hergestellt:

Komponenten C1), C2), C4), C5), C1*) und C2*)

In einem thermostatisierten Rührkessel wurden unter Reinstickstoff 4800 g gereinigtes, wasserfreies Cyclohexan, 48 ml Tetrahydrofuran und monomeres Styrol zur Bildung des A-Blocks (Mengen gemäß Tabelle 1) vorgelegt. Nach dem Austitrieren der noch vorhandenen protonenaktiven Verunreinigungen mit sek.-Butyllithium wurde die berechnete Menge Initiator sek.-Butyllithium (1,4-molare Lösung in Cyclohexan/Isopentan) zugesetzt.

Die Temperaturen der Polymerisation wurden bei 40 °C 1 h gehalten, um den ersten Block aus Polystyrollithium zu bilden.

Sodann wurde in den Rührkessel gereinigtes monomeres 1,3-Butadien (gemäß Tabelle 1) eingespeist und bei Temperaturen zwischen 40 und 75 °C bis zur vollständigen Umsetzung unter Bildung von Ketten aus zwei Segmenten Polystyrol-Polybutadienyllithium polymerisiert. Die Polymerisation war nach 1 h vollständig.

Danach wurden 15 ml Isopropanol zugesetzt, um den Abbruch der lebenden Polymerketten sicherzustellen.

Nach jeder Polymerisationsstufe wurde dem Reaktionsgefäß eine Probemenge für analytische Zwecke entnommen.

Komponenten C3) und C4)

Es wurde zunächst Butadien bei 40 °C 1 h polymerisiert und anschließend bei 40 °C das Styrol zugegeben. Nach 1 weiteren Stunde bei 40 °C war die Polymerisation beendet. Die beiden Produkte hatten einen höheren 1,2-Gehalt als die oben beschriebenen.

Tabelle 1

| eingesetzte Mengen | | | |
|---|---|---|---|
| | Styrol-A-Block [g] | 1,3-Butadien-B-Block [g] | sek.-Butyllithium [mmol] |
| C1 | 240 | 960 | 7,8 |
| C2 | 480 | 720 | 7,2 |
| C3 | 360 | 840 | 6,6 |
| C4 | 300 | 900 | 7,8 |
| C5 | 300 | 900 | 7,2 |
| C1* | 300 | 900 | 28,2 |
| C2* | 190 | 965 | 4,6 |

Hydrierung der Komponenten C1) bis C1*)

Die selektive Hydrierung der Blockcopolymeren C1-C1* erfolgte durch Zugabe einer Katalysatorlösung aus 1,4 g Nickel (II) acetylacetonat in 80 g Toluol, versetzt mit 30 ml einer 20 gew.-%igen Lösung von Aluminiumtriisobutyl in Hexan und einem Wasserstoffdruck von 15 bar bei 80 °C Hydriertemperatur. Die fortschreitende Hydrierreaktion konnte dabei über die Wasserstoffaufnahme (Druckabfall im Reaktor) verfolgt werden.

Die Aufarbeitung erfolgte durch Fällung der Polymeren.

Tabelle 2

| Komponente | Struktur | Polystyrolanteil [Gew.-%] | Molekulargewicht AB | Hydrierungsgrad des Polybutadienblocks [Gew.-%] | 1,2-Gehalt [Gew.-%] |
|---|---|---|---|---|---|
| C1) | S-EB[a)] | 20 | 250.000 | 97 | 54 |
| C2) | S-EB[a)] | 40 | 240.000 | 99 | 56 |
| C3) | S-EB[a)] | 30 | 175.000 | 95 | 67 |
| C4) | S-EB[a)] | 25 | 210.000 | 98 | 69 |
| C5) | S-EB[a)] | 25 | 200.000 | 97 | 55 |
| C1*) | S-EB[a)] | 25 | 50.000 | 98 | 53 |
| C2*) | S-B[b)] | 17 | 230.000 | 0 | 55 |
| C3*) | S-EB[c)]-S | 28 | - | | |
| C4*) | S-EP[d)]-S | 37 | - | | |
| C5*) | S-B-S[e)] | 29 | - | | |
| C6*) | S-I-S[f)] | 30 | - | | |

*) zum Vergleich
a) hydriertes Polybutadien
b) Polybutadien
c) Styrol-hydriertes Polybutadien-Styrol-Dreiblockcopolymer (Kraton®G 1650, Firma Shell AG) mit einer Brookfield Viskosität von 1500 (c = 20 Gew.-%)
d) Styrol-hydriertes Polyisopren-Dreiblockcopolymer (Kraton®G 11701 Firma Shell AG)
e) Styrol-Polybutadien-Styrol-Dreiblockcopolymer (Cariflex® TR 1101, Firma Shell AG) mit einer Brookfield Viskosität von 4000 (c = 25 Gew.-%)
f) Styrol-Polyisopren-Styrol-Dreiblockcopolymer (Cariflex® TR 1107, Firma Shell AG) mit einer Brookfield Viskosität von 1600 (c = 25 Gew.-%)

Komponente D

Ein Ethylencopolymer aufgebaut aus
70 Gew.-% Ethylen
25 Gew.-% n-Butylacrylat und
5 Gew.-% Acrylsäure
mit einem MFI von 20 g/10 min bei 190 °C und 2,16 kg Belastung

Komponente E1)

Roter Phosphor der mittleren Teilchengröße ($D_{50}$) von 45 µm.

Komponente E2)

Ein Copolymer aus
98 Gew.-% Styrol und
2 Gew.-% Maleinsäureanhydrid

Herstellung der Formkörper

Die Formmassen gemäß Tabelle 3 wurden auf einem Zweischneckenextruder bei einer Zylindertemperatur von 280 °C gemischt. Der Schmelzstrang wurde durch ein Wasserbad geführt und granuliert. Das getrocknete Granulat wurde bei 300 °C zu Rundscheiben (60 x 2 mm) und bei 280 °C zu Normkleinstäben gespritzt.

Die Kerbschlagzähigkeit $a_K$ (Charpy) wurde nach DIN 53 453, die Durchstoßarbeit nach DIN 53 443 und die Fließfähigkeit MVI nach DIN 57 735 (bei 275 °C, 10 kg Belastung) bestimmt.

Die Verformung der Rundscheiben bei Schlagbeanspruchung wurde nach DIN 53 443 bestimmt. Die Meßgröße wurde aus dem instrumentierten Durchstoßtest (DIN 53 443) erhalten; dabei wurde die Kraftverformungskurve, die integriert die Durchstoßarbeit ergibt, ausgewertet. Die Verformung bei maximaler Kraft (Verformung $F_{max}$) ist diejenige Strecke, die der Bolzen des Prüfgerätes zurücklegt, an dem die übertragene Kraft das Maximum durchläuft (vgl. hierzu DIN-Taschenbuch 18: "Kunststoffe 1 - mechanische, thermische und elektrische Eigenschaften, Prüfnormen", 8. Auflage 1984; Beuth Verlag GmbH, Berlin, Köln, Seite 138).

Die Zusammensetzung der Formmassen sowie die Ergebnisse der Messungen sind der nachfolgenden Tabelle 3 zu entnehmen.

Tabelle 3

| Nr. | Zusammensetzung [Gew.-%] | Kerbschlagzähigkeit [kJ/m²] | Durchstoßarbeit [Nm] | MVI [Ml/10'] | Verformung bei $F_{max}$ [mm] |
|---|---|---|---|---|---|
| 1 | 46 A2) 45 B2) 9 C1) | 16 | 47 | 35 | 15,6 |
| 2 | 46 A2) 45 B2) 9 C2) | 14 | 57 | 33 | 17 |
| 3 | 46 A2) 45 B2) 9 C3) | 17 | 58 | 36 | 16,4 |
| 4 | 46 A2) 45 B2) 9 C4) | 19 | 57 | 33 | 16,8 |
| 5 | 46 A2) 45 B2) 9 C5) | 14 | 50 | 34 | 15,9 |
| 6 *) | 46 A2) 45 B2) 9 C1*) | 9 | 18 | 39 | 7,2 |
| 7 *) | 46 A2) 45 B2) 9 C2*) | 4 | 4 | 32 | 5,0 |
| 8 *) | 46 A2) 45 B2) 9 C3*) | 10 | 34 | 30 | 9,8 |
| 9**) | 46 A2) 45 B2) 9 C4*) | 11 | 36 | 28 | 10.9 |
| 10*) | 46 A2) 45 B2) 9 C5*) | 10 | 39 | 32 | 10.4 |
| 11*) | 46 A2) 45 B2) 9 C6*) | 6 | 11 | 42 | 6,2 |
| 12*) | 46 A1) 25 B2)+ 20 B1) 9 C4) | 22 | 55 | - | - |
| 13 | 46 A1) 45 B2) 5 C3) 4 D) | 25 | 45 | - | - |
| 14***) | 44 A2) 45 B2) 8 C3) 3 E1) | 12 | 30 | - | - |
| 15*) | 44 A2) 43 B1) 8 C1) 5 E2) | 12 | 35 | - | - |

*) zum Vergleich
**) Vergleich gemäß der Lehre WO 87/5311
***) Brandtest nach UL 94 (1/8" Stab) V-0

## Patentansprüche

1. Thermoplastische Formmassen, enthaltend
   A) 5 bis 95 Gew.-% eines thermoplastischen Polyamids,

B) 3 bis 80 Gew.-% eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxi-, Oxazolin-, Urethan-, Harnstoff-, Lactam- oder Halogenbenzylgruppe modifizierten Polyphenylenethers,
C) 2 bis 20 Gew.-% eines Blockcopolymeren der allgemeinen Formel A-B, bestehend aus einem vinylaromatischen Block A und einem teilhydrierten Polybutadienblock B,
D) 0 bis 20 Gew.-% eines von C) verschiedenen kautschukelastischen Polymerisates und
E) 0 bis 60 Gew.-% üblicher Zusatzstoffe,

wobei die Summen der Komponenten A) bis E) 100 Gew.-% ergibt, dadurch gekennzeichnet, daß die Komponente C)

- ein mittleres Molekulargewicht von mindestens 75.000 aufweist und
- der polyvinylaromatische Block A 10 bis 50 Gew.-%, bezogen auf 100 Gew.-% der gesamten Komponente C) ausmacht und
- der Polybutadienblock B) einen Hydrierungsgrad von 50 bis 99 Gew.-%

aufweist.

**2.** Thermoplastische Formmassen nach Anspruch 1, in denen die Komponente C) ein mittleres Molekulargewicht von mindestens 100.000 aufweist.

**3.** Thermoplastische Formmassen nach den Ansprüchen 1 und 2, in denen der Polybutadienblock B einen Hydrierungsgrad von 70 bis 99 % aufweist.

**4.** Thermoplastische Formmassen nach den Ansprüchen 1 bis 3, in denen der modifizierte Polyphenylenether B) durch Umsetzung von
$b_1$) 70 bis 99,95 Gew.-% eines Polyphenylenethers
$b_2$) 0 bis zu weniger als 40 Gew.-% eines vinylaromatischen Polymeren
$b_3$) 0,05 bis 30 Gew.-% mindestens einer Verbindung aus der Gruppe, gebildet aus
$b_{31}$) einer $\alpha,\beta$-ungesättigten Dicarbonylverbindung und
$b_{32}$) eines Amid-Gruppen enthaltenden Monomeren mit einer polymerisierbaren Doppelbindung und
$b_{33}$) eines Lactam-Gruppen enthaltenden Monomeren mit einer polymerisierbaren Doppelbindung
$b_4$) 0 bis 5 Gew.-% eines Radikalstarters,
wobei sich die Gewichtprozente auf die Summe von $b_1$) bis $b_4$) beziehen,
im Verlaufe von 0,2 bis 15 Minuten bei 240 °C bis 375 °C erhältlich ist.

**5.** Thermoplastische Formmassen nach den Ansprüchen 1 bis 4, in denen der teilhydrierte Polybutadienblock B einen 1.2-Gehalt von 25 bis 95 Gew.-% aufweist.

**6.** Verwendung der thermoplastischen Formmassen gemäß den Ansprüchen 1 bis 4 zur Herstellung von Formkörpern.

**7.** Formkörper, erhältlich aus den thermoplastischen Formmassen gemäß den Ansprüchen 1 bis 4.

## Claims

**1.** A thermoplastic molding material, containing
A) from 5 to 95% by weight of a thermoplastic polyamide,
B) from 3 to 80% by weight of a polyphenylene ether modified by incorporating one or more carbonyl, carboxyl, anhydride, amide, imide, carboxylic ester, carboxylate, amino, hydroxyl, epoxy, oxazoline, urethane, urea, lactam or halobenzyl groups,
C) from 2 to 20% by weight of a block copolymer of the formula A-B, consisting of a vinylaromatic block A and a partly hydrogenated polybutadiene block B,
D) from 0 to 20% by weight of an elastomeric polymer which differs from C) and
E) from 0 to 60% by weight of conventional additives,

the sums of components A) to E) being 100% by weight, wherein component C) has a mean molecular weight of not less than 75,000, the polyvinylaromatic block A accounts for from 10 to 50% by weight, based on 100% by weight of the total amount of component C), and the polybutadiene block B) has a degree of hydrogenation of from 50 to 99% by weight.

2. A thermoplastic molding material as claimed in claim 1, wherein component C) has a mean molecular weight of not less than 100,000.

3. A thermoplastic molding material as claimed in claim 1 or 2, wherein the polybutadiene block B has a degree of hydrogenation of from 70 to 99% by weight.

4. A thermoplastic molding material as claimed in any of claims 1 to 3, wherein the modified polyphenylene ether B) is obtainable by reacting
   $b_1$) from 70 to 99.95% by weight of a polyphenylene ether,
   $b_2$) from 0 to less than 40% by weight of a vinylaromatic polymer,
   $b_3$) from 0.05 to 30% by weight of one or more compounds of the group consisting of
      b31) an $\alpha,\beta$-unsaturated dicarbonyl compound,
      b32) an amide-containing monomer having a polymerizable double bond and
      b33) a lactam-containing monomer having a polymerizable double bond
   and
   $b_4$) from 0 to 5% by weight of a free radical initiator, the percentages by weight being based on the sum of $b_1$) to $b_4$),
   in the course of from 0.2 to 15 minutes at from 240 to 375 °C.

5. A thermoplastic molding material as claimed in any of claims 1 to 4, wherein the partly hydrogenated polybutadiene block B has a 1,2 content of from 25 to 95% by weight.

6. Use of a thermoplastic molding material as claimed in any of claims 1 to 4 for the production of moldings.

7. A molding obtainable from a thermoplastic molding material as claimed in any of claims 1 to 4.

**Revendications**

1. Masses à mouler thermoplastiques, contenant
   A) 5 à 95% en poids d'un polyamide thermoplastique,
   B) 3 à 80% en poids d'un poly(oxyphénylène) modifié par incorporation d'au moins un groupement carbonyle, acide carboxylique, anhydride d'acide, amide d'acide, imide d'acide, ester d'acide carboxylique, carboxylate, amino, hydroxy, époxy, oxazoline, uréthanne, urée, lactame ou halogénobenzyle,
   C) 2 à 20% en poids d'un copolymère séquencé de formule générale A-B, composé d'un bloc vinylaromatique A et d'un bloc polybutadiène partiellement hydrogéné B,
   D) 0 à 20% en poids d'un polymère ayant l'élasticité du caoutchouc, différent de C), et
   E) O à 60% en poids d'additifs usuels,
   la somme des composants A) à E) donnant 100% en poids, caractérisées en ce que
   - le composant C) présente un poids moléculaire moyen d'au moins 75 000,
   - le bloc polyvinylaromatique A constitue 10 à 50% en poids, par rapport à 100% en poids du composant C) total et
   - le bloc polybutadiène B présente un degré d'hydrogénation de 50 à 99%.

2. Masses à mouler thermoplastiques selon la revendication 1, dans lesquelles le composant C) présente un poids moléculaire moyen d'au moins 100 000.

3. Masses à mouler thermoplastiques selon la revendication 1 ou 2, dans lesquelles le bloc polybutadiène B présente un degré d'hydrogénation de 70 à 99%.

4. Masses à mouler thermoplastiques selon l'une quelconque des revendications 1 à 3, dans lesquelles le poly(oxyphénylène) modifié B) peut être obtenu par réaction de
   $b_1$) 70 à 99,95% en poids d'un poly(oxyphénylène),
   $b_2$) 0 à moins de 40% en poids d'un polymère vinylaromatique,
   $b_3$) 0,05 à 30% en poids d'au moins un composé du groupe constitué par
      $b_{31}$) un composé dicarbonylé $\alpha,\beta$-insaturé,

$b_{32}$) un monomère contenant des groupements amide et comportant une double liaison polymérisable et

$b_{33}$) un monomère contenant des groupements lactame et comportant une double liaison polymérisable,

$b_4$) 0 à 5% en poids d'un amorceur radicalaire,

les pourcentages en poids se rapportant à la somme de $b_1$) à $b_4$),

pendant des durées de 0,2 a 15 mn à des températures de 240 °C a 375 °C.

**5.** Masses à mouler thermoplastiques selon l'une quelconque des revendications 1 à 4, dans lesquelles le bloc polybutadiène partiellement hydrogéné B présente une teneur en butadiène-1,2 de 25 à 95% en poids.

**6.** Utilisation des masses à mouler thermoplastiques selon l'une quelconque des revendications 1 à 4 pour la fabrication de corps moulés.

**7.** Corps moulés, obtenus à partir des masses à mouler thermoplastiques selon l'une quelconque des revendications 1 à 4.